# EUROPEAN PATENT APPLICATION

(11) **EP 4 741 582 A1**
(43) Date of publication of application: **13.05.2026**
(21) Application number: 23946790.5
(22) Date of filing: 05.09.2023
(51) Int. Cl.: E02F 9/20, E02F 9/08

(54) **ELECTRIC CONSTRUCTION MACHINE**

(30) Priority: 25.07.2023 KR 20230096511
(71) Applicant: HD Hyundai Infracore Co., Ltd., Incheon 22502 (KR)
(72) Inventor: SEO, Hyunjae, Ansan-si, Gyeonggi-do 15484 (KR); HAN, Yonghee, Bucheon-si, Gyeonggi-do 14731 (KR)
(74) Representative: Isarpatent
(86) International application number: PCT/KR2023/013235
(87) International publication number: WO 2025/023365

(57) **Abstract**

An electric construction machine according to the present invention comprises: a vehicle body; a battery disposed on the vehicle body; a power distribution unit to which power is supplied from the battery; a motor unit that is supplied with power from the power distribution unit for traveling or working of the vehicle body; and a power module mounting unit which is disposed on the vehicle body and on which a power module for supplying power is replaceably mounted; wherein the power distribution unit is supplied with power from the power module and the battery.

## Description

### [TECHNICAL FIELD]

The present invention relates to a construction machine, and more particularly, to an electric construction machine driven by electric energy.

### [BACKGROUND ART]

Construction machines such as excavators and wheel loaders are widely used to perform operations such as excavating and transporting loads such as soil and sand, and loading them onto cargo vehicles such as dump trucks. These operations are performed by driving working implements installed on the construction machine, such as the bucket and the boom, and the operation of the construction machine is carried out by controlling the working implements, such as the boom and the bucket, through an actuator such as a hydraulic cylinder.

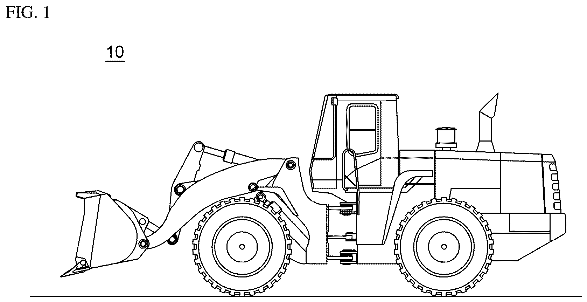

A conventional wheel loader 10 shown in FIG. 1 is equipped with an engine such as a diesel engine, thus being able to work freely without restrictions on the work location.

However, diesel, which is a fossil fuel, is becoming progressively depleted and causes air pollution, and thus the need for eco-friendly alternative energy is emerging seriously. In addition, fossil fuels have disadvantages in that fuel costs are high and operating costs increase due to high fuel consumption owing to the nature of heavy equipment. As one solution to this problem, electric wheel loaders using electric energy have emerged.

In the case of such electric wheel loaders, unlike wheel loaders driven by diesel engines, the hydraulic pump is not driven by the engine, thus requiring an efficient layout structure, and in the case of pure electric wheel loaders, separate equipment may be required for heavy battery attachment/detachment.

### [DESCRIPTION OF THE INVENTION]

### [TECHNICAL PROBLEM]

An object of the present invention is to provide an electric construction machine which is driven by electric energy, has an efficient layout structure, and allows for easy replacement of a battery or the like.

### [SOLUTION TO THE PROBLEM]

An electric construction machine according to the present invention comprises: a vehicle body; a battery disposed on the vehicle body; a power distribution unit to which power is supplied from the battery; a motor unit that is supplied with power from the power distribution unit for traveling or working of the vehicle body; and a power module mounting unit which is disposed on the vehicle body and on which a power module for supplying power is replaceably mounted; wherein the power distribution unit is supplied with power from the power module and the battery.

In addition, the construction machine may be configured to be driven only by power from the battery.

In addition, the construction machine may further include a cooling device for cooling heat generated from the power module.

In addition, the motor unit may include a traveling motor for traveling of the vehicle body.

In addition, the construction machine may further include working implements which are disposed at a front of the vehicle body and includes a boom and a bucket.

In addition, the construction machine may further include a hydraulic pump for supplying hydraulic oil to a hydraulic actuator of the working implement.

In addition, the motor unit may include a working motor for driving the hydraulic pump by receiving power from the power distribution unit.

In addition, the construction machine may further include an inverter for converting direct current (DC) electricity supplied from the power distribution unit into alternating current (AC) electricity and supplying the AC electricity to the working motor.

In addition, the power module mounting unit may include: a cylinder; a cylinder rod that is retracted into and extended from the cylinder; and a lifting member which is connected to the cylinder rod, is moved up and down, and is for raising or lowering the power module.

In addition, the power module mounting unit may further include a side plate disposed to face the power module.

In addition, the power module may be fixed to the side plate.

In addition, the power module mounting unit may be characterized in that a fuel cell module, a battery module, and a hybrid module including an engine and a generator can all be replaceably mounted.

Additionally, the power module may be one of a fuel cell module, a battery module, and a hybrid module including an engine and a generator.

In addition, the power module may include a controller for each module.

In addition, the generator may produce electricity by the engine, and the hybrid module may further include an inverter for converting AC electricity produced by the generator into DC electricity.

In addition, the power module may be a fuel cell module, and the fuel cell module may include: a hydrogen tank; and a fuel cell power pack for receiving hydrogen from the hydrogen tank to produce electricity.

In addition, the hydrogen tank may be disposed at a lower portion of the fuel cell module.

In addition, the fuel cell power pack may be disposed on an upper side of the hydrogen tank.

In addition, an electric construction machine according to the present invention includes: a vehicle body; a fuel cell module which is disposed on the vehicle body and includes a hydrogen tank and a fuel cell power pack for receiving hydrogen from the hydrogen tank to produce electricity; a power distribution unit to which power is supplied from the fuel cell module; a battery that is charged by the fuel cell module; and a motor unit that is supplied with power from the power distribution unit for traveling or working of the vehicle body; wherein the power distribution unit is supplied with power from the fuel cell module and the battery.

### [ADVANTAGEOUS EFFECTS OF THE INVENTION]

The electric construction machine according to the present invention has an effect in that power modules such as a fuel cell module, a battery module, and a hybrid module can be replaceably mounted on the power module mounting unit, and the power module can be easily replaced without separate equipment.

In addition, the present invention has an effect in that even if any one of the fuel cell module, the battery module, and the hybrid module is mounted on the power module mounting unit of the electric construction machine according to the present invention, the construction machine can be driven by the same power distribution unit and a power layout connected thereto.

### [BRIEF DESCRIPTION OF DRAWINGS]

FIG. 1 is a diagram illustrating a conventional wheel loader;
FIG. 2 is a schematic diagram illustrating a main configuration of an electric construction machine according to the present invention;
FIG. 3 is a diagram illustrating a configuration of a controller in the electric construction machine according to the present invention;
FIG. 4 is a side view illustrating a state in which a fuel cell module is mounted on a power module mounting unit in the electric construction machine according to the present invention;
FIGS. 5 and 6 are diagrams illustrating a main configuration of the electric construction machine equipped with the fuel cell module;
FIGS. 7 and 8 illustrate the power module mounting unit of the electric construction machine according to the present invention, wherein FIG. 7 is a diagram illustrating a raised state of a hook member, and FIG. 8 is a diagram illustrating a lowered state of the hook member;
FIG. 9 is a side view illustrating a state in which a battery module is mounted on the power module mounting unit in the electric construction machine according to the present invention; and
FIG. 10 is a side view illustrating a state in which a hybrid module is mounted on the power module mounting unit in the electric construction machine according to the present invention.

### [MODES FOR CARRYING OUT THE INVENTION]

The advantages and features of the present invention, and the methods of achieving them, will become apparent with reference to the embodiments described in detail below in conjunction with the accompanying drawings. However, the present invention is not limited to the embodiments disclosed below but may be implemented in various other forms; the embodiments are provided merely to ensure a complete disclosure of the present invention and to fully inform those skilled in the art of the scope of the invention. The present invention is defined only by the scope of the claims. Therefore, in some embodiments, well-known process steps, well-known device structures, and well-known technologies are not described in detail so as not to obscure the present invention. Throughout the specification, the same reference numerals refer to the same elements.

In the drawings, the thicknesses of layers and regions may be exaggerated for clarity. Throughout the specification, similar parts are designated by the same reference numerals. When an element such as a layer, film, region, or plate is referred to as being "on" another element, it may be disposed directly on the other element or one or more intervening elements may be present therebetween. Conversely, when a part is referred to as being "directly on" another part, it means that there is no intervening part therebetween. Also, when an element such as a layer, film, region, or plate is referred to as being "under" another element, it may be disposed directly beneath the other element or with one or more intervening elements may be present therebetween. Conversely, when a part is referred to as being "directly under" another part, it means that there are no intervening parts.

Spatially relative terms, such as "below", "beneath", "lower", "above", "upper", and the like, may be used herein for ease of description to describe one element or feature's relationship to another element(s) or feature(s) as illustrated in the figures. It should be understood that the spatially relative terms are intended to encompass different orientations of the device in use or operation in addition to the orientation depicted in the figures. For example, if the device in the figures is turned over, elements described as "below" or "beneath" other elements would then be oriented "above" the other elements. Thus, the exemplary term "below" can encompass both an orientation of below and above. The device may be otherwise oriented and the spatially relative descriptors used herein interpreted accordingly.

Hereinafter, an electric construction machine 1000 according to a preferred embodiment of the present invention will be described in detail with reference to the attached drawings.

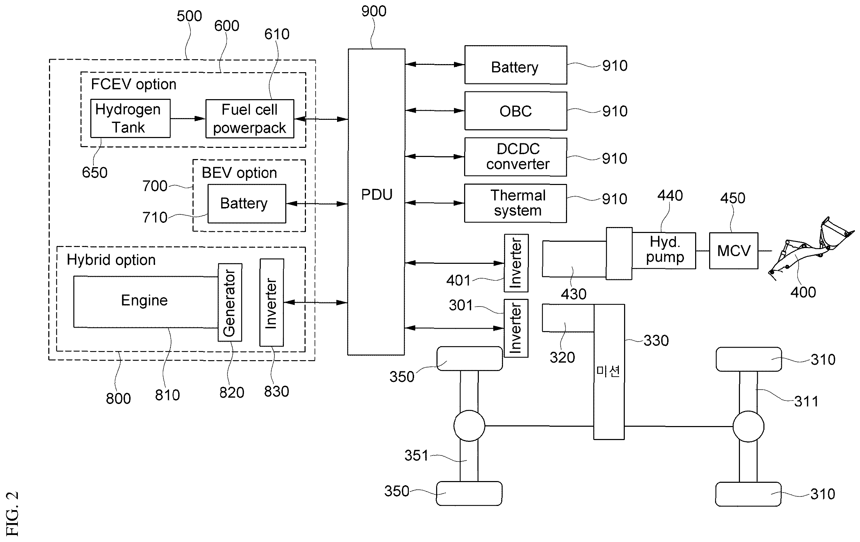

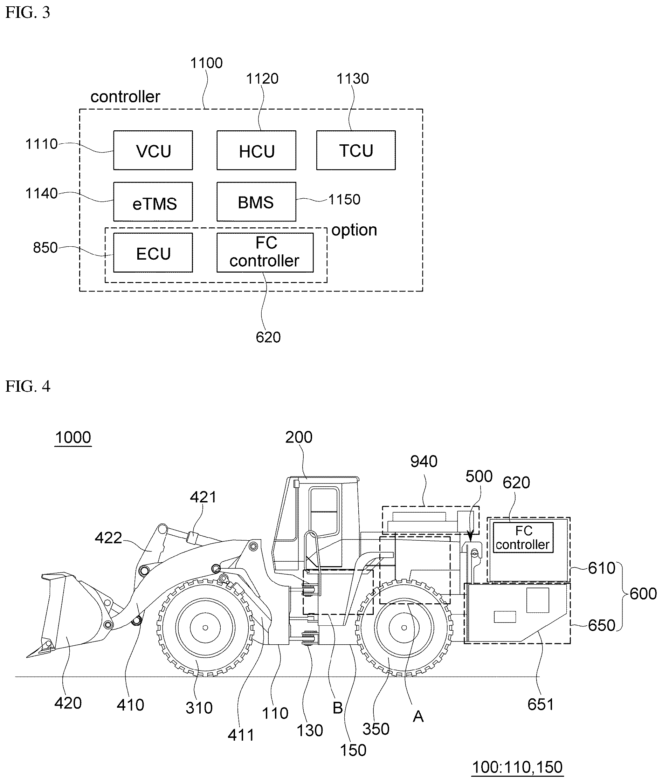

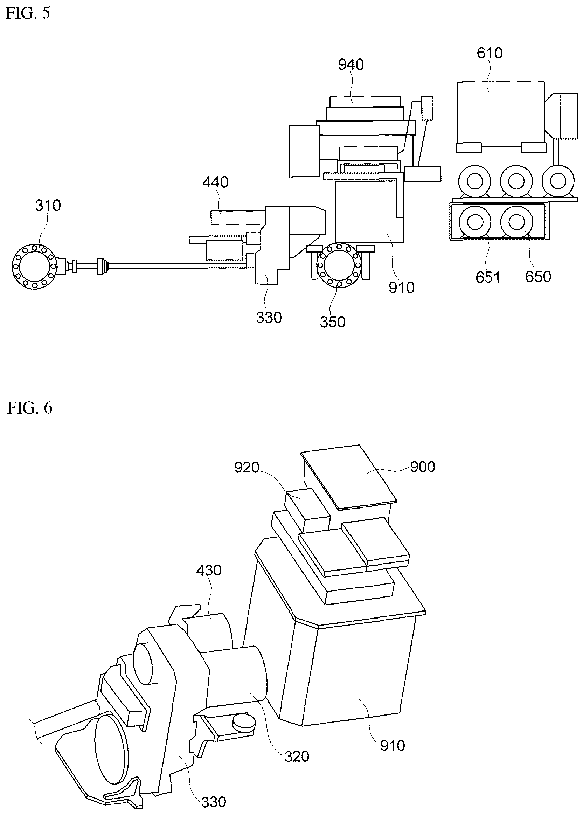

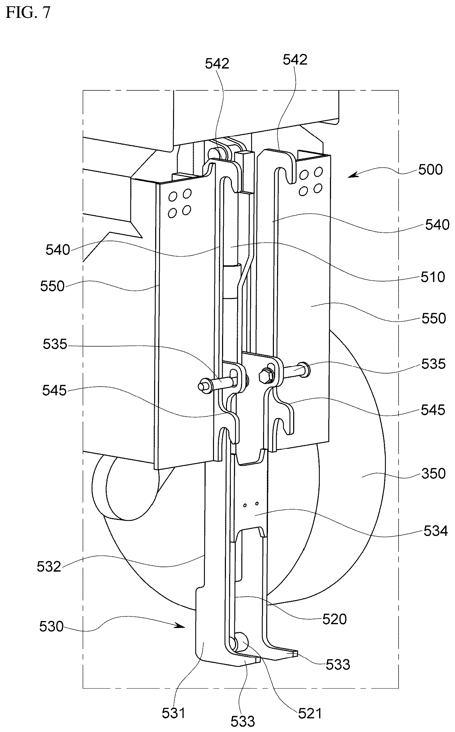

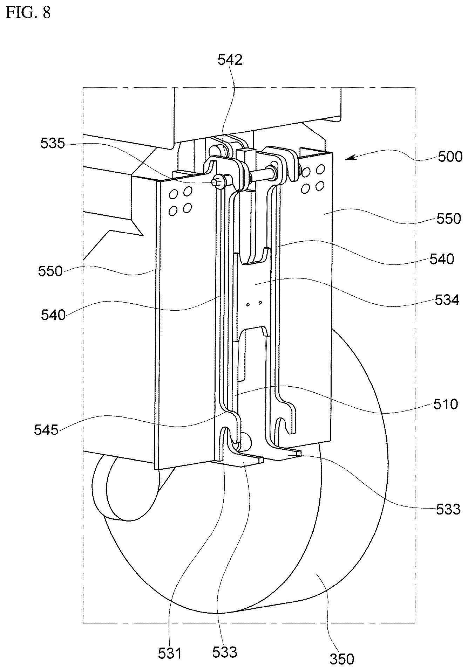

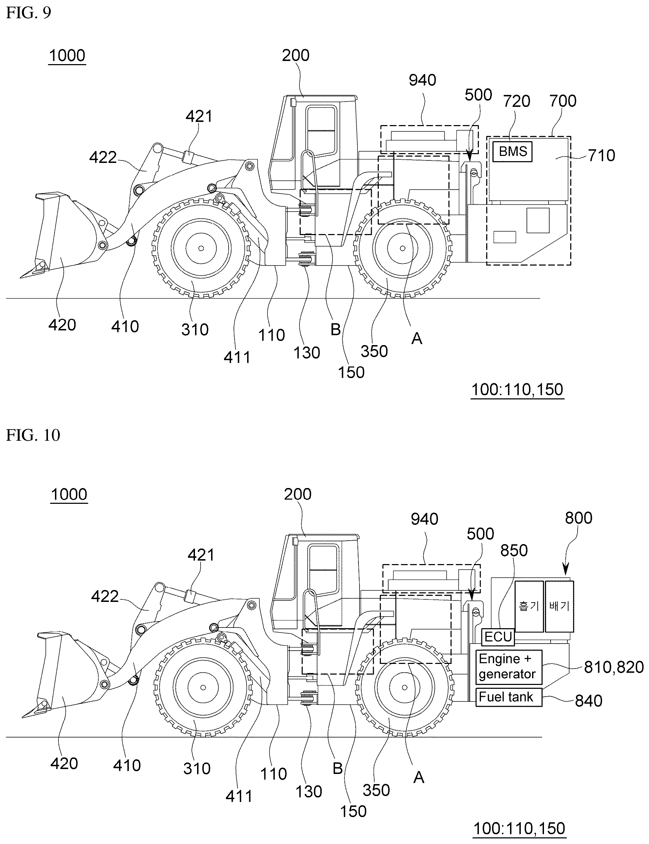

FIG. 2 is a schematic diagram illustrating a main configuration of an electric construction machine according to the present invention, FIG. 3 is a diagram illustrating a configuration of a controller in the electric construction machine according to the present invention, FIG. 4 is a side view illustrating a state in which a fuel cell module is mounted on a power module mounting unit in the electric construction machine according to the present invention, FIGS. 5 and 6 are diagrams illustrating a main configuration of the electric construction machine equipped with the fuel cell module, FIGS. 7 and 8 illustrate the power module mounting unit of the electric construction machine according to the present invention, wherein FIG. 7 is a diagram illustrating a raised state of a hook member, and FIG. 8 is a diagram illustrating a lowered state of the hook member, FIG. 9 is a side view illustrating a state in which a battery module is mounted on the power module mounting unit in the electric construction machine according to the present invention, and FIG. 10 is a side view illustrating a state in which a hybrid module is mounted on the power module mounting unit in the electric construction machine according to the present invention.

Although the electric construction machine 1000 according to the present invention will be described using a wheel loader as an example, the present invention is not limited thereto and may be applied to other construction machines such as an excavator.

The electric construction machine 1000 according to the present invention may include a vehicle body 100, a cab 200, a traveling unit, a working implement 400, and a power module mounting unit 500.

The vehicle body 100 may include a front body 110 and a rear body 150 positioned at the rear of the front body 110, and the front body 110 and the rear body 120 may be rotatably connected to each other. The working implement 400 and front wheels 310 may be disposed on the front body 110. The cab 200, the power mounting unit 500, and rear wheels 350 may be disposed on the rear body 150.

In addition, the front body 110 and the rear body 150 may be rotatably connected to each other by a center pin 130, and the front body 110 may be articulated left or right with respect to the rear body 150 by expansion and contraction of a steering cylinder (not shown).

The cab (Cabin, 200) is for an operator to board the cab 200 and drive and operate the construction machine 1000, and is installed on the vehicle body 100 of the construction machine 1000 and may be installed on an upper portion of the rear body 150.

The cab 200 may be provided with operation control devices, and the operation control devices may include a traveling pedal, a brake pedal, an FNR traveling lever, operation levers for operating working cylinders such as a boom cylinder and a bucket cylinder 421, and a steering device for operating the steering cylinder.

The traveling unit is for driving the construction machine 1000, and may include a traveling motor 320, a transmission 330, front wheels 310 disposed on the front body 110, and rear wheels 350 disposed on the rear body 150.

The traveling motor 320 is for driving the front wheels 310 and the rear wheels 350 for traveling of the electric construction machine 1000, and the traveling motor 320 is driven by electricity supplied from a power distribution unit (PDU, 900) through a first inverter 301.

The transmission 330 is connected to the traveling motor 320, and a driving force of the traveling motor 320 is transmitted to a front axle 311 and a rear axle 351 through the transmission 330 and is transmitted to the front wheels 310 disposed on both sides of the front axle 311 and the rear wheels 350 disposed on both sides of the rear axle 351, respectively.

In the present embodiment, a case where the front and rear wheels 310, 350 are driven by one traveling motor 320 has been illustrated, but respective traveling motors 320 may be disposed to drive the front axle 311 and the rear axle 351.

In the traveling unit, the front axle 311 and the front wheels 310 may be disposed on the front body 110, and the first inverter 301, the traveling motor 320, the transmission 330, the rear axle 351, and the rear wheels 350 may be disposed on the rear body 150. The traveling motor 320, a working motor 430, and the transmission 330 may be disposed in region B shown in FIG. 4. Region B may be located in the rear body 150.

The working implement 400 may include a boom 410 disposed on the front body 110, and a bucket 420 disposed on the front body 110 and connected to the boom 410. The boom 410 may be rotatably connected to the front body 110. The boom 410 is connected to the front body 110 by a boom cylinder, and may be rotated in an upward-downward direction by driving of the boom cylinder 411. The bucket 420 is connected to a bucket cylinder 421 by a tilt arm 422, and the bucket 420 may be rotated at one end of the boom 410 by driving of the bucket cylinder 421.

For such a working implement 400, a hydraulic pump 440 is driven by a working motor 430 supplied with electricity from the power distribution unit PDU, 900, and the hydraulic pump 440 supplies hydraulic oil to each hydraulic actuator boom cylinder and bucket cylinder 421 for operation of the boom 410 and the bucket 420 through a main control valve 450, whereby the boom 410 and the bucket 420 of the working implement 400 are operated.

In the present invention, the working motor 430 and the hydraulic pump 440 may be disposed on the rear body 150, and the working implement 400 including the main control valve 450 may be disposed on the front body 110.

The power module mounting unit 500 is for supplying power for operation of the construction machine, and supplies power to the electric construction machine 1000 according to the present invention.

To this end, a power module for supplying power is mounted on the power module mounting unit 500, and as will be described later, power modules such as a fuel cell module 600, a battery module 700, and a hybrid module 800 may be replaceably mounted on the power module mounting unit 500.

The power module mounting unit 500 of the present invention may be disposed at a rear of the rear body 150.

Meanwhile, FIG. 3 is a diagram illustrating a controller 1100 of the electric construction machine 1000 according to the present invention, and the controller 1100 includes a VCU 1110 for controlling overall vehicle operation, an HCU 1120 for electric power system control, power generation amount control, charging amount control, traveling control, and the like, a TCU 1130 for transmission control, an eTMS 1140 for controlling cooling devices such as an electric fan, a water pump, a refrigerant heater, and a compressor, and a BMS(Battery Management System) 1150.

In addition, the controller 1100 may include an engine control unit (ECU) 850 when the hybrid module 800 is mounted on the power module mounting unit 500, may include a fuel cell controller (FC controller) 620 for controlling an overall operation of the fuel cell module 600 when the fuel cell module 600 is mounted on the power module mounting unit 500, and may include a BMS 720 for controlling an operation of the battery module 720 when the battery module 700 is mounted. As described above, in the present invention, the power module may include a controller for controlling each module.

Next, a power system of the electric construction machine 1000 of the present invention will be described. FIG. 2 is a schematic diagram illustrating a main configuration of the electric construction machine 1000 focusing on the power system, wherein power modules such as a fuel cell module 600, a battery module 700, and a hybrid module 800 are mounted on a power module mounting unit 500, so that electricity produced or stored from the power modules may be supplied to a power distribution unit 900.

The power distribution unit 900 may receive electricity from the power module mounted on the power module mounting unit 500, a battery 910, or an OBC 920, or the like, and distribute the electricity to constituent elements as described below. The power distribution unit 900 may include a busbar, a fuse, a relay, or the like. In the present invention, the power distribution unit 900 may be disposed above the battery 910 in the rear body 150 (see FIG. 6).

In the present invention, the power distribution unit 900 may be electrically connected to the battery 910, an On-Board Charger(OBC) 920, a converter 930, a cooling device(Thermal system) 940, a first inverter 301, a second inverter 401, and the like, as illustrated in FIG. 2.

The battery 910 is for storing electric energy or supplying the stored electric energy to the power distribution unit 900, wherein electricity produced from the power module mounted on the power module mounting unit 500 may be stored in the battery 910 through the power distribution unit 900, and electricity from an external power source may be stored in the battery 910 via the OBC 920.

The battery 910 may be, for example, a lithium-ion battery, a lithium iron phosphate battery, or the like, but is not limited thereto. In the present invention, the battery 910 may be disposed on the rear body 150 as illustrated, and the capacity of the battery 910 may be, for example, 60 kWh or another capacity.

The battery 910 may be provided with a BMS (Battery Management System) 1150 capable of checking a state of charge of the battery 910.

The BMS 1150 can detect the amount of stored charge, i.e., the potential, in various ways, such as by detecting an internal resistance that changes according to a state of charge (SOC) and temperature to estimate the potential. Thereby, when the remaining capacity (SOC) of the battery 910 is equal to or less than a certain level, the battery 910 can be charged from the power module through the power distribution unit 900.

The electric construction machine 1000 according to the present invention can operate using only the power from the battery 910 even when the power module is not mounted, and thus, the construction machine can operate normally even in a situation where the power module is replaced or there is an abnormality in the power module. In addition, the battery 910, which can be fixed to the vehicle body, may be disposed separately from the detachable fuel cell module 600 to distribute risks such as fire and failure.

The On-Board Charger(OBC) 920 is for supplying power to the construction machine 1000 from an external power source, wherein power may be supplied from the external power source through a charging port (not shown) provided on the vehicle body 100, and power may be supplied to the power distribution unit 900 via the OBC 920. In the present invention, the OBC 920 may be disposed above the battery 910 in the rear body 150, and the charging port may be disposed on one side of the rear body 150.

The converter 930 is for converting a voltage of DC power supplied from the power module mounted on the power module mounting unit 500, the battery 910, or the like, and is a DC-DC converter. The converter 930 can control the voltage such that the voltage of the supplied DC electricity is smaller than a set value. For example, the converter 930 can step down a voltage of 600 V to a voltage of 12 V.

The converter 930 may convert the voltage of the DC electricity supplied as described above and supply it to the working motor 430, the traveling motor 320, and the like.

The battery 910, the OBC 920, the converter 930, the first inverter 301, the second inverter 401, and the like may be disposed in region A shown in FIG. 4.

The cooling device(Thermal system) 940 can cool heat generated from the power module mounted on the power module mounting unit 500. The cooling device 940 may be configured as a system in which coolant circulates, and the coolant that has cooled the power module passes through a radiator, is cooled as air is introduced into the radiator by an electric fan, and may be supplied again to the power module by a pump. In the present invention, the cooling device 940 may be disposed above the battery 910 in the rear body 150 and may be disposed in front of the power module and the power module mounting unit 500, as illustrated.

When the fuel cell module 600 is mounted on the power module mounting unit 500, the cooling device 940 can cool a fuel cell stack; when the battery module 700 is mounted on the power module mounting unit 500, it can cool the battery module 700; and when the hybrid module 800 is mounted on the power module mounting unit 500, it can cool the engine 810, the generator 820, the inverter 830, and the like. In addition, the cooling device 940 can cool the battery 910, the working motor 430, the traveling motor 320, and the like.

In addition, the cooling device 940 may include a separate refrigerant circulation system for cooling the coolant. In this case, the cooling device may include a compressor, a condenser, an evaporator, and the like, according to a refrigerant circulation cycle, and the coolant may be cooled by the cooled refrigerant.

The electric construction machine of the present invention includes a motor unit that is supplied with power from the power distribution unit for traveling or working of the vehicle body 100. The motor unit may include a traveling motor 320 for traveling of the vehicle body 100 and a working motor 430 for performing work of the construction machine via the working implement 400.

The first inverter 301 converts DC electricity supplied from the power distribution unit 900 into AC electricity, and the electricity converted into AC electricity by the first inverter 301 is supplied to the traveling motor 320.

The traveling motor 320 is for driving the front and rear wheels 310, 350 for traveling of the electric construction machine 1000, wherein the traveling motor 320 is driven by electricity supplied through the first inverter 301, and a driving force of the traveling motor 320 is transmitted to the front and rear wheels 310, 350 through the transmission 330.

The second inverter 401 converts DC electricity supplied through the power distribution unit 900 into AC electricity, and the electricity converted into AC electricity by the second inverter 401 is supplied to the working motor 430.

The working motor 430 is for driving the hydraulic pump 440 for supplying hydraulic oil to the working implement 400 including the boom 410 and the bucket 420, wherein the working motor 430 is driven by electricity supplied through the second inverter 401.

A pump drive including a gearbox may be connected to the working motor 430, and a driving force of the working motor 270 is transmitted to the hydraulic pump 440 via the pump drive.

The hydraulic pump 440 can drive the working implement 400 by supplying hydraulic oil, and may be classified into a variable displacement type and a fixed displacement type. A pump control device is connected to the variable displacement hydraulic pump, and a discharge flow rate of the variable displacement hydraulic pump may be controlled by the pump control device. The hydraulic pump 440 may be connected to a main control valve (MCV) 450 including a boom control valve and a bucket control valve through a predetermined hydraulic circuit. Oil discharged from the hydraulic pump 440 may be supplied to the boom cylinder 411 and the bucket cylinder 421 through the boom control valve and the bucket control valve of the main control valve 450. The main control valve 450 can supply hydraulic oil discharged from the hydraulic pump 440 to the boom cylinder 411 and the bucket cylinder 421 according to a pilot pressure signal input according to an operation of an operation lever in the cab 200. Accordingly, the boom 410 and the bucket 420 of the working implement 400 may be driven by hydraulic pressure of the hydraulic oil discharged from the hydraulic pump 440.

In the present invention, in a hydraulic system, the hydraulic pump 440 may be disposed on the rear body 150, and the main control valve 450, the boom cylinder 411, the bucket cylinder 421, and the like may be disposed on the front body 110.

As described above, in the electric construction machine 1000 according to the present invention, hydraulic system parts excluding the hydraulic pump 440 are disposed on the front body 110, and the electric power system including the power module, the power distribution unit 900, the battery 910, the OBC 920, the converter 930, the working motor 430, the traveling motor 320, and the like, is disposed on the rear body 150, whereby the possibility of the electric system being contaminated by hydraulic oil of the hydraulic system is lowered, and as a result, safety can be ensured.

Next, the power module mounted on the power module mounting unit 500 will be described. FIG. 4 is a diagram illustrating the electric construction machine 1000 in which the fuel cell module 600 is mounted on the power module mounting unit 500.

As a power module, the fuel cell module 600 includes a fuel cell power pack 610 and a hydrogen tank 650.

The fuel cell power pack 610 includes a fuel cell stack, and electricity is produced in the fuel cell stack by a chemical reaction between hydrogen and oxygen.

Specifically, when hydrogen is supplied from the hydrogen tank 650 to an anode in the fuel cell stack, it is separated into hydrogen ions (H+) and electrons (e-) at the anode, and the separated hydrogen ions (H+) move to a cathode through an electrolyte and then combine with oxygen (O2) supplied to the cathode to generate water (H2O) and heat, and the electrons (e-) move to an electric circuit to produce electricity.

The reaction equations occurring at each electrode are as follows:

Anode: 2H2 (g) → 4H+ + 4e-

Cathode: O2 (g) + 4H+ + 4e- → 2H2O (ℓ)

Oxygen is supplied from external air, and the external air may be filtered by an air filter, compressed by a compressor, and then supplied to the fuel cell stack through a humidifier.

A fuel cell controller(FC controller) 620 may be placed in the fuel cell power pack 610 to control the overall operation of the fuel cell module 600.

The hydrogen tank 650 is for supplying hydrogen to the fuel cell stack of the fuel cell power pack 610, may consist of a plurality of tanks in which hydrogen is stored, and the plurality of tanks may be stored in a case 651.

In the present embodiment, as illustrated in FIG. 4, the hydrogen tank 650 may be disposed at a lower side in the power module mounting unit 500 disposed at the rear of the rear body 150, and the fuel cell power pack 610 may be disposed on an upper side of the hydrogen tank 650. Since the hydrogen tank 650 is disposed at the lower side in the power module mounting unit 500, working stability and weight balance of the bucket 420 can be improved, and since the fuel cell power pack 610 is disposed on the upper side, connection with the power distribution unit 900 can be facilitated.

Meanwhile, FIGS. 7 and 8 are diagrams illustrating the power module mounting unit 500 in the present invention, wherein FIG. 7 illustrates a state in which a hook member 531 for supporting the power module is lowered, and FIG. 8 illustrates a state in which the hook member 531 is raised.

The power module mounting unit 500 includes a cylinder 510, a cylinder rod 520, a lifting member 530, a guide member 540, and a side plate 550.

In the power module mounting unit 500, the cylinder 510 is disposed vertically as illustrated, and the cylinder rod 520 is retracted into or extended from the cylinder 510 pneumatically or hydraulically. And, the lifting member 530 is raised or lowered by the operation of the cylinder rod 520.

The lifting member 530 supports the power module, is connected to the cylinder rod 520, and is raised or lowered by the operation of the cylinder 510, and includes a hook member 531 and a pin 535 disposed on an upper portion of the hook member 531.

The hook member 531 includes a vertical extension part 532 and a support part 533.

The vertical extension part 532 is in the form of a plate extending vertically upward and downward, the support part 533 is formed at a lower end of the vertical extension part 532, and the pin 535 is coupled to an upper end of the vertical extension part 532.

The support part 533 supports a lower portion of the power module, and may be bent and protrude rearward of the construction machine 1000 from the lower end of the vertical extension part 532 and be formed integrally with the vertical extension part 532.

To explain a coupling relationship between the hook member 531 and the cylinder rod 520, a coupling hole is formed at an end of the cylinder rod 520 to penetrate left and right, a pin 521 is coupled into the coupling hole, and the hook member 531 is coupled to the pin 521. In the present embodiment, as illustrated, a pair of hook members 531 may be coupled to both ends of the pin 521, and the pair of hook members 531 may be connected to each other by a bridge-shaped connecting part 534.

Accordingly, when the lower portion of the power module is supported by the support part 533 of the hook member 531 and the hook member 531 is raised by the operation of the cylinder 510, the power module is raised together.

The pin 535 coupled to the upper end of the vertical extension part 532 is horizontally coupled at the upper end of the vertical extension part 532, and in the present embodiment, the pin 535 may be coupled to each of the vertical extension parts 532 of the pair of hook members 531. The pin 535 may allow upward movement of the hook member 531 to be restricted by a stopper 542, which will be described later, when the hook member 531 is raised.

The guide member 540 is in the form of a plate extending vertically upward and downward, is disposed parallel to an outer side of the vertical extension part 532, and the stopper 542 is disposed on an upper portion of the guide member 540.

The stopper 542 is disposed on the upper portion of the guide member 540 and can restrict the upward movement of the hook member 531. Specifically, when the hook member 531 is raised, the pin 535 may contact the stopper 542, so that the upward movement of the hook member 531 may be restricted. In addition, the stopper 542 has a loop shape with its end bent downward, and thus, as illustrated in FIG. 8, it can perform a role of fixing and supporting the pin 535 inside the loop of the stopper 542, and the power module can be stably supported on the hook member 531 by fixing the pin 535.

A lower stopper 545 may be disposed on a lower portion of the guide member 540. The lower stopper 545 is disposed on the lower portion of the guide member 540 and can restrict downward movement of the hook member 531. Specifically, when the hook member 531 is lowered, the pin 535 may contact the lower stopper 545, so that the downward movement of the hook member 531 may be restricted.

In the present embodiment, a pair of guide members 540 may be disposed on outer sides of the pair of hook members 531, respectively.

A side plate 550 is disposed on an outer side of the guide member 540. The side plate 550 is in the form of a plate extending vertically upward and downward, one surface of which may be coupled to the guide member 540, and may be disposed to face the power module.

The power module may be fixed to the side plate 550 after the hook member 531 has finished rising, and a plurality of fixing holes may be formed for this purpose. As illustrated, a pair of side plates 550 may be disposed on outer sides of the pair of guide members 540, respectively.

A process of mounting the power module on the power module mounting unit 500 having such a configuration will be described. When the hook member 531 is in a raised state as in FIG. 8, the hook member 531 is brought to a lowered state as in FIG. 7 by the operation of the cylinder 510. Specifically, when the cylinder rod 520 is extended from retracted into the cylinder 510 by the operation of the cylinder 510, the hook member 531 connected to the cylinder rod 520 is lowered, and at this time, the support part 533 of the hook member 531 may be lowered to the ground. When the support part 533 of the hook member 531 is lowered to the ground and the lowering of the hook member 531 is completed, the power module is then seated on the hook member 531. At this time, a lower case portion of the power module may be seated on and supported by the support part 533 of the hook member 531.

When the power module is the fuel cell module 600, a lower portion of the case of the fuel cell module 600 or a lower portion of the case 651 storing the hydrogen tank 650 may be supported by the support part 533; when it is the battery module 700, a lower case portion of the battery module 700 may be supported; and when it is the hybrid module 800, a lower case portion of the hybrid module 800 or a lower portion of the fuel tank 840 may be supported.

When the lower case portion of the power module is seated on and supported by the support part 533 of the hook member 531 as described above, the hook member 531 is then switched to the raised state. Specifically, when the cylinder rod 520 is retracted into (extended from) the cylinder 510 by the operation of the cylinder 510, the hook member 531 connected to the cylinder rod 520 is raised, and due to the raising of the hook member 531, the power module supported by the support part 533 of the hook member 531 is raised together.

When the power module and the hook member 531 are raised to a home position where the power module is mounted in the power module mounting unit 500, the operation of the cylinder 510 can be stopped and the power module can be fixed to the side plate 550. Specifically, the power module can be detachably coupled to the fixing holes of the side plate 550 using bolts or the like.

In addition, a power cable of the power module can be connected to a connector (not shown) connected to the power distribution unit 900, and as a result, electricity generated from the power module can be supplied to the power distribution unit 900. In addition, when replacing the power module in the power module mounting unit 500, the power cable of the power module can be disconnected from the connector connected to the power distribution unit 900.

Meanwhile, FIG. 9 is a diagram illustrating the electric construction machine 1000 in a state in which the battery module 700 is mounted on the power module mounting unit 500.

The battery module 700 includes a battery 710, and a capacity of the battery 710 may be larger than that of the battery 910 pre-mounted on the construction machine 1000. The capacity of the battery 710 may be, for example, 240 kWh, but is not limited thereto, and other capacities may be applied.

The battery module 700 may be provided with a BMS(Battery Management System) 720. The BMS 720 is a system for monitoring the battery 710 to optimally maintain the state of the battery 710, can check the state of charge of the battery 710, and can detect the amount of stored charge, i.e., the potential, in various ways, such as by detecting an internal resistance that changes according to a state of charge (SOC) and temperature to estimate the potential.

When the battery module 700 is mounted on the power module mounting unit 500, a lower case portion of the battery module 700 may be supported by the support part 533 of the hook member 531, and the battery module 700 may be detachably fixed to the side plate 550 at the home position where the battery module 700 is mounted in the power module mounting unit 500.

In addition, a power cable of the battery module 700 may be detachably connected to the connector connected to the power distribution unit 900.

FIG. 10 is a diagram illustrating the electric construction machine 1000 in a state in which the hybrid module 800 is mounted on the power module mounting unit 500.

The hybrid module 800 is a power module that generates electricity by driving a generator by an engine, and includes an engine 810, a generator 820, and an inverter 830.

The engine 810 is for driving the generator 820 to generate electricity in the generator 820, and in the present invention, the engine 810 may be, for example, a diesel engine, but is not limited thereto, and a gasoline engine, a liquefied petroleum gas or natural gas engine, or the like may be used.

The generator 820 generates electricity by driving of the engine 810, and the electricity generated in the generator 820 is supplied to the inverter 830.

The inverter 830 converts AC into DC in the electricity generated by the generator 820, and the electricity converted into DC by the inverter 830 is supplied to the power distribution unit 900.

The electricity generated by the generator 820 may be supplied to each component connected to the power distribution unit 900 and may be stored in the battery 910.

The hybrid module 800 may be provided with an engine control unit (ECU) 850 for controlling an overall operation of the engine 810.

Regarding the layout of the hybrid module 800 in the power module mounting unit 500, as illustrated, the engine 810, the generator 820, and the fuel tank 840 may be disposed at a lower portion, and an intake system part for supplying air to the engine 810 and an exhaust system part for discharging exhaust gas from the engine 810 may be disposed at an upper portion.

As described above, in the present invention, power modules such as the fuel cell module 600, the battery module 700, and the hybrid module 800 may be replaceably mounted on the power module mounting unit 500 disposed on the rear body 150, and since the power module mounting unit 500 has the configuration as described above, the power module can be easily replaced without separate equipment.

In addition, even if any one of the fuel cell module 600, the battery module 700, and the hybrid module 800 is mounted on the power module mounting unit 500, the construction machine can be driven by the same power distribution unit 900 and a power layout connected thereto.

In addition, since the power module mounting unit 500 on which the power module is mounted is disposed at the rear of the rear body 150, it can replace a counterweight mounted at a rear of a conventional construction machine, and thus, the counterweight may be omitted.

Although the present invention has been described with reference to the preferred embodiments, it is not limited to the above-described embodiments, and various changes and modifications may be made by one of ordinary skill in the art to which the present invention pertains without departing from the spirit of the present invention.

### [INDUSTRIAL APPLICABILITY]

The present invention provides an electric construction machine in which power modules such as a fuel cell module, a battery module, and a hybrid module can be replaceably mounted on a power module mounting unit, and the power module can be easily replaced without separate equipment.

## Claims

1. An electric construction machine, comprising: a vehicle body;
a battery disposed on the vehicle body;
a power distribution unit to which power is supplied from the battery;
a motor unit that is supplied with power from the power distribution unit for traveling or working of the vehicle body; and
a power module mounting unit which is disposed on the vehicle body and on which a power module for supplying power is replaceably mounted, wherein
the power distribution unit is supplied with power from the power module and the battery.

2. The electric construction machine of claim 1, wherein
the construction machine is configured to be driven only by power from the battery.

3. The electric construction machine of claim 1, further comprising
a cooling device for cooling heat generated from the power module.

4. The electric construction machine of claim 1, wherein
the motor unit includes a traveling motor for traveling of the vehicle body.

5. The electric construction machine of claim 1, further comprising
a working implement which is disposed at a front of the vehicle body and includes a boom and a bucket.

6. The electric construction machine of claim 5, further comprising
a hydraulic pump for supplying hydraulic oil to a hydraulic actuator of the working implement.

7. The electric construction machine of claim 6, wherein
the motor unit includes a working motor for driving the hydraulic pump by receiving power from the power distribution unit.

8. The electric construction machine of claim 7, further comprising
an inverter for converting DC electricity supplied from the power distribution unit into AC electricity and supplying the AC electricity to the working motor.

9. The electric construction machine of claim 1, wherein
the power module mounting unit comprises:
a cylinder;
a cylinder rod that is retracted into and extended from the cylinder; and
a lifting member which is connected to the cylinder rod, is moved up and down, and is for raising or lowering the power module.

10. The electric construction machine of claim 9, wherein
the power module mounting unit further comprises a side plate disposed to face the power module.

11. The electric construction machine of claim 10, wherein
the power module is fixed to the side plate.

12. The electric construction machine of claim 1, wherein
the power module mounting unit is **characterized in that** a fuel cell module, a battery module, and a hybrid module including an engine and a generator can all be replaceably mounted.

13. The electric construction machine of claim 1, wherein
the power module is one of a fuel cell module, a battery module, and a hybrid module including an engine and a generator.

14. The electric construction machine of claim 13, wherein
the power module includes a controller for each module.

15. The electric construction machine of claim 13, wherein
the generator produces electricity by the engine, and
the hybrid module further comprises an inverter for converting AC electricity produced by the generator into DC electricity.

16. The electric construction machine of claim 1, wherein
the power module is a fuel cell module, and
the fuel cell module comprises:
a hydrogen tank; and
a fuel cell power pack for receiving hydrogen from the hydrogen tank to produce electricity.

17. The electric construction machine of claim 16, wherein
the hydrogen tank is disposed at a lower portion of the fuel cell module.

18. The electric construction machine of claim 17, wherein
the fuel cell power pack is disposed on an upper side of the hydrogen tank.

19. An electric construction machine, comprising:
a vehicle body having a working implement, which includes a boom and a bucket, disposed at a front thereof;
a fuel cell module which is detachably disposed at a rear of the vehicle body and includes: a hydrogen tank; and a fuel cell power pack disposed on an upper side of the hydrogen tank for receiving hydrogen from the hydrogen tank to produce electricity;
a power distribution unit to which power is supplied from the fuel cell module;
a battery which is disposed separately from the fuel cell module with respect to the power distribution unit and is charged by the fuel cell module; and
a motor unit that is supplied with power from the power distribution unit for traveling or working of the vehicle body,
wherein the power distribution unit is supplied with power from the fuel cell module and the battery.
